# EUROPEAN PATENT APPLICATION

(11) **EP 0 947 550 A1**
(43) Date of publication of application: **06.10.1999**
(21) Application number: 99300402.7
(22) Date of filing: 20.01.1999
(51) Int. Cl.: C08L 23/04, C08L 23/10, H01B 3/00

(54) **Tree resistant cable**

(30) Priority: 30.03.1998 US 50487
(71) Applicant: UNION CARBIDE CHEMICALS & PLASTICS TECHNOLOGY CORPORATION, Danbury, Connecticut 06817-0001 (US)
(72) Inventor: Jow, Jinder, Somerville, New Jersey 08876 (US)
(74) Representative: Hayes, Adrian Chetwynd

(57) **Abstract**

A composition comprising:
(i) 100 parts by weight of a noncrosslinked or crosslinked thermoplastic resin; and
(ii) 0.5 to 20 parts by weight of a resin having a molecular weight in the range of 1000 to 100,000 containing one or more functional groups, each functional group having a bond energy in the range of 1.0 to 3.7 electronvolts.

## Description

### Technical Field

This invention relates to electric power cable insulated with a polyethylene composition having an improved resistance to water trees.

### Background Information

A typical electric power cable generally comprises one or more conductors in a cable core that is surrounded by several layers of polymeric material including a first semiconducting shield layer, an insulating layer, a second semiconducting shield layer, a metallic tape or wire shield, and a jacket.

These insulated cables are known to suffer from shortened life when installed in an environment where the insulation is exposed to water, e.g., underground or locations of high humidity. The shortened life has been attributed to the formation of water trees, which occur when an organic polymeric material is subjected to an electrical field over a long period of time in the presence of water in liquid or vapor form. The formation of water trees is believed to be caused by a complex interaction of the AC electrical field, moisture, time, and the presence of ions. The net result is a reduction in the dielectric strength of the insulation.

Many solutions have been proposed for increasing the resistance of organic insulating materials to degradation by water treeing. One solution involves the addition of polyethylene glycol, as a water tree growth inhibitor, to a low density polyethylene such as described in United States Patents 4,305,849; 4,612,139; and 4,812, 505. This solution has been successfully applied for many years, but there is a continuous industrial demand for improvement partially because power cable is increasingly exposed to harsher environments, and partially because consumers are more concerned with cable longevity, e.g., a service life of 40 to 50 years.

### Disclosure of the Invention

An object of this invention, therefore, is to provide a thermoplastic resin composition, which, when converted to cable insulation, exhibits a much improved resistance to water trees. Other objects and advantages will become apparent hereinafter.

According to the invention, a composition has been discovered which meets the above object.

The composition comprises
(i) a thermoplastic resin, crosslinked or not crosslinked; and, for each 100 parts by weight of component (i),
(ii) about 0.5 to about 20 parts by weight of a resin having a molecular weight in the range of about 1000 to about 100,000 containing one or more functional groups, each functional group having a bond energy in the range of about 1.0 to 3.8 electronvolts.

### Description of the Preferred Embodiment(s)

The thermoplastic polymer (or resin) can be any homopolymer or copolymer produced from two or more comonomers, or a blend of two or more of these polymers, particularly those conventionally used as insulating and/or jacketing materials in wire and cable applications. The polymer is either in the form of a particle or a pellet, which is simply a large particle. The average particle size can be in the range of about 200 to about 6000 microns , and is preferably in the range of about 250 to about 4000 microns. It is found that the particle or pellet is made up of an outer portion, which can be referred to as the skin, and an inner portion. The skin can have a thickness in the range of about 100 to about 1000 microns, and preferably has a thickness of about 200 to about 500 microns.

The polymers are thermoplastic resins, which are either crosslinkable or responsive to chain scission with organic peroxides. Many can be classified as polyolefins. The monomers useful in the production of these homopolymers and copolymers can have 2 to 20 carbon atoms, and preferably have 2 to 12 carbon atoms. Examples of these monomers are alpha-olefins such as ethylene, propylene, 1-butene, 1-hexene, 4-methyl-1-pentene, and 1-octene; unsaturated esters such as vinyl acetate, ethyl acrylate, methyl acrylate, methyl methacrylate, t-butyl acrylate, n-butyl acrylate, n-butyl methacrylate, 2-ethylhexyl acrylate, and other alkyl acrylates; diolefins such as 1,4-pentadiene, 1,3-hexadiene, 1,5-hexadiene, 1,4-octadiene, and ethylidene norbornene, commonly the third monomer in a terpolymer; other monomers such as styrene, p-methyl styrene, alpha-methyl styrene, p-chloro styrene, vinyl naphthalene, and similar aryl olefins; nitriles such as acrylonitrile, methacrylonitrile, and alpha-chloroacrylonitrile; vinyl methyl ketone, vinyl methyl ether, vinylidene chloride, maleic anhydride, vinyl chloride, vinylidene chloride, vinyl alcohol, tetrafluoroethylene, and chlorotrifluoroethylene; and acrylic acid, methacrylic acid, and other similar unsaturated acids. Hydrogenated styrene-butadiene copolymers can also be included in this, list.

The homopolymers and copolymers referred to can be non-halogenated, or halogenated in a conventional manner, generally with chlorine or bromine. Examples of halogenated polymers are polyvinyl chloride, polyvinylidene chloride, and polytetrafluoroethylene. The homopolymers and copolymers of ethylene and propylene are preferred, both in the non-halogenated and halogenated form. Included in this preferred group are terpolymers such as ethylene/propylene/diene monomer rubbers.

With respect to polypropylene: homopolymers and copolymers of propylene and one or more other alpha-olefins wherein the portion of the copolymer based on propylene is at least about 60 percent by weight based on the weight of the copolymer can be used to provide the polyolefin of the invention. The polypropylene can be prepared by conventional processes such as the process described in United States patent 4,414,132. The alpha-olefins in the copolymer are preferably those having 2 or 4 to 12 carbon atoms.

The homopolymers or copolymers of ethylene wherein ethylene is the primary comonomer and the homopolymers and copolymers of propylene wherein propylene is the primary comonomer may be referred to herein as polyethylene and polypropylene, respectively. These polymers are preferred.

Low pressure, high density polyethylene can be referred to as HDPE; high pressure, low density polyethylene can be referred to as HP-LDPE; low pressure straight chain (linear) low density ethylene/alpha-olefin copolymer can be referred to as LLDPE; and low pressure straight chain very low density ethylene/alpha-olefin copolymer can be referred to as VLDPE.

All of the polymers mentioned can be produced using various conventional transition metal catalysts including the Ziegler-Natta catalysts and the metallocene single-site catalysts. Various resins and processes for making them are mentioned in United States patents 5,346,961 and 5,317,036.

The polyethylene can be, for example, a high pressure polyethylene having a density in the range of 0.915 to about 0.955 gram per cubic centimeter and a melt index in the range of about 0.1 to about 100 grams per 10 minutes. High pressure polyethylenes and the process for making them are well known and are described in Introduction to Polymer Chemistry, Stille, Wiley and Sons, New York, 1962, pages 149 to 153. Melt index is determined in accordance with ASTM D-1238, Condition E, and measured at 190 degrees C.

The polyethylene can also be, for example, an LLDPE having a density in the range of 0.915 to 0.925 gram per cubic centimeter and a melt index in the range of about 0.1 to about 100 grams per 10 minutes or a VLDPE, which is also linear. The VLDPE can be a copolymer of ethylene and at least one alpha-olefin having 3 to 12 carbon atoms and preferably 3 to 8 carbon atoms. The density of the VLDPE is equal to or less than 0.915 gram per cubic centimeter and is preferably no lower than 0.860 gram per cubic centimeter. The melt index of the VLDPE can be in the range of about 0.1 to about 50 grams per 10 minutes and is preferably in the range of about 0.4 to about 10 grams per 10 minutes.

Both the linear low density and the very low density polyethylenes and methods for preparing them have also been described in the literature. They can be produced, for example, in the presence of (i) a catalyst containing chromium and titanium, (ii) a catalyst containing magnesium, titanium, a halogen, and an electron donor; or (iii) a catalyst containing vanadium, an electron donor, an alkyl aluminum halide modifier, and a halocarbon promoter. The catalysts and the processes for making these polyethylenes are described, respectively, in United States patent 4,101,445; United States patent 4,302,565; and European patent application 120 501.

The portion of the ethylene copolymers attributed to the comonomer(s), other than ethylene, can be in the range of about 1 to about 49 percent by weight based on the weight of the copolymer and is preferably in the range of about 15 to about 40 percent by weight. A third comonomer can be a diene such as ethylidene norbornene, butadiene, 1,4-hexadiene, and a dicyclopentadiene. The third comonomer can be present in an amount of about 1 to 15 percent by weight based on the weight of the copolymer and is preferably present in an amount of about 1 to about 10 percent by weight. It is preferred that the copolymer contain two or three comonomers inclusive of ethylene.

A thermoplastic polymer is one which is capable of being repeatedly softened by heating and hardened by cooling through a characteristic temperature range. The characteristic temperature range, for example, of the thermoplastic polymers, polyethylene and polypropylene, is about 80 to about 170 degrees C. The change to these thermoplastic materials on heating is mainly physical. Through the addition of crosslinking agents such as organic peroxides, thermoplastic polyethylene becomes thermosetting polyethylene. Such a thermosetting polymer is capable of changing to an infusible or insoluble product by the addition of heat or radiation, the primary change being chemical. The net effect of the organic peroxide is to is to chemically link the polymer chains thereby increasing the polymer's average molecular weight, i.e., weight average molecular weight.

Mixtures of polypropylene and organic peroxides, on the other hand, do not form thermosetting polymers. The application of heat to such a mixture does initiate a chemical reaction. The effect, however, is not crosslinking, but chain scission thereby decreasing the weight average molecular weight.

Component (ii) is a water tree retardant additive. It can be present in an amount of about 0.5 to about 20 parts by weight per 100 parts by weight of component (i), and is preferably present in an amount of about 1.0 to about 15 parts by weight. The additive is a polymer (resin) having a molecular weight in the range of about 1000 to about 100,000, preferably about 2000 to about 50,000. It can be any of the resins described above with the provisos that the resin has the defined molecular weight and has at least one functional group having a bond energy, i.e., a chemical bond energy, in the range of about 1.0 to 3.7 electronvolts (eV), and preferably in the range of about 2.0 to about 2.96 electronvolts. Electronvolts can be converted to kilojoules per mole (kJ/mole), if desired, by multiplying the number of electronvolts by 96.4. Thus, 3.7 eV = 356 kJ/mole and 2.96 eV = 286 kJ/mole.

In addition, the additives selected should be those, which are most compatible with component (i) and other conventional additives used in the composition, and are non-migratory.

Examples of materials with desirable functional groups are C-N amide (2.3 eV); N-O (2.6 eV); C-N (2.95 eV); Si-H (3.25 eV); C-O in C-O-C ether bond (3.4 eV).

Examples of materials with undesirable functional groups are Si-O (3.8 eV); N-H (4.5 eV); O-H (4.8 eV).

The upper limit for electronvolts is 3.7 eV. It is noted that at these chemical bond energy levels the conductivity of the resin used as the water tree retardant increases by at least 100 times over the water tree retardant in its virgin state wherein the functional groups are either decomposed or oxidized.

Conventional additives, which can be introduced into the polyethylene formulation, are exemplified by antioxidants, coupling agents, ultraviolet absorbers or stabilizers, antistatic agents, pigments, dyes, nucleating agents, reinforcing fillers or polymer additives, slip agents, plasticizers, processing aids, lubricants, viscosity control agents, tackifiers, anti-blocking agents, surfactants, extender oils, metal deactivators, voltage stabilizers, flame retardant fillers and additives, crosslinking agents, boosters, and catalysts, and smoke suppressants. Fillers and additives can be added in amounts ranging from less than about 0.1 to more than about 200 parts by weight for each 100 parts by weight of the base resin, in this case, polyethylene.

Examples of antioxidants are: hindered phenols such as tetrakis[methylene(3,5-di-tert- butyl-4-hydroxyhydrocinnamate)]methane, bis[(beta-(3,5-ditert-butyl-4-hydroxybenzyl)-methylcarboxyethyl)}sulphide, 4,4'-thiobis(2-methyl-6-tert-butylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; and various amines such as polymerized 2,2,4-trimethyl-1,2-dihydroquinoline. Antioxidants can be used in amounts of about 0.1 to about 5 parts by weight per 100 parts by weight of polyethylene.

The thermoplastic resins can be crosslinked by adding a crosslinking agent to the composition or by making the resin hydrolyzable, which is accomplished by adding hydrolyzable groups such as -Si(OR)₃ wherein R is a hydrocarbyl radical to the resin structure through copolymerization or grafting.

Suitable crosslinking agents are organic peroxides such as dicumyl peroxide; 2,5-dimethyl- 2,5-di(t-butylperoxy)hexane; t-butyl cumyl peroxide; and 2,5-dimethyl-2,5-di(t-butylperoxy)hexan-3. Dicumyl peroxide is preferred.

Hydrolyzable groups can be added, for example, by copolymerizing ethylene with an ethylenically unsaturated compound having one or more -Si(OR)₃ groups such as vinyltrimethoxy-silane, vinyltriethoxysilane, and gamma-methacryloxypropyltrimethoxysilane or grafting these silane compounds to the resin in the presence of the aforementioned organic peroxides. The hydrolyzable resins are then crosslinked by moisture in the presence of a silanol condensation catalyst such as dibutyltin dilaurate, dioctyltin maleate, dibutyltin diacetate, stannous acetate, lead naphthenate, and zinc caprylate. Dibutyltin dilaurate is preferred.

Examples of hydrolyzable copolymers and hydrolyzable grafted copolymers are ethylene/ vinyltrimethoxy silane copolymer, ethylene/gamma- methacryloxypropyltrimethoxy silane copolymer, vinyltrimethoxy silane grafted ethylene/ethyl acrylate copolymer, vinyltrimethoxy silane grafted linear low density ethylene/1-butene copolymer, and vinyltrimethoxy silane grafted low density polyethylene.

The cable of the invention can be prepared in various types of extruders, e.g., single or twin screw types. Compounding can be effected in the extruder or prior to extrusion in a conventional mixer such as a Brabender™ mixer or a Banbury™ mixer. A description of a conventional extruder can be found in United States patent 4,857,600. A typical extruder has a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and two zones, the back heat zone and the front heat zone, the sections and zones running from upstream to downstream. In the alternative, there can be multiple heating zones (more than two) along the axis running from upstream to downstream. If it has more than one barrel, the barrels are connected in series. The length to diameter ratio of each barrel is in the range of about 15:1 to about 30:1. In wire coating, where the material is crosslinked after extrusion, the die of the crosshead feeds directly into a heating zone, and this zone can be maintained at a temperature in the range of about 130°C to about 260°C, and preferably in the range of about 170°C to about 220°C.

The advantages of the invention lie in the much improved water tree growth rate.

The term "surrounded" as it applies to a substrate being surrounded by an insulating composition, jacketing material, or other cable layer is considered to include extruding around the substrate; coating the substrate; or wrapping around the substrate as is well known by those skilled in the art. The substrate can include, for example, a core including a conductor or a bundle of conductors, or various underlying cable layers as noted above.

All molecular weights mentioned in this specification are weight average molecular weights unless otherwise designated.

The patents mentioned in this specification are incorporated by reference herein.

## Claims

1. A composition comprising:
(i) 100 parts by weight of a noncrosslinked or crosslinked thermoplastic resin; and
(ii) 0.5 to 20 parts by weight of a resin having a molecular weight in the range of 1000 to 100,000 containing one or more functional groups, each functional group having a bond energy in the range of 1.0 to 3.7 electronvolts.

2. The composition defined in claim 1 wherein component (i) is polyethylene or polypropylene or a mixture thereof.

3. The composition defined in claim 1 or 2 wherein component (ii) is present in an amount of 1.0 to 15 parts by weight.

4. The composition defined in any one of the preceding claims wherein the functional group has a bond energy in the range of 2.0 to 2.96 electronvolts.

5. A composition comprising:
(i) 100 parts by weight of a noncrosslinked or crosslinked polyethylene or polypropylene or a mixture thereof; and
(ii) 1.0 to 15 parts by weight of a resin having a molecular weight in the range of 2000 to 50,000 containing one or more functional groups, each functional group having a bond energy in the range of 2.0 to 2.96 electronvolts.

6. A cable comprising one or more electrical conductors or a core of electrical conductors, each conductor or core being surrounded by an insulating composition comprising a composition as defined in any one of the preceding claims.
